# EUROPEAN PATENT APPLICATION

(11) **EP 1 921 100 A1**
(43) Date of publication of application: **14.05.2008**
(21) Application number: 07021574.4
(22) Date of filing: 06.11.2007
(51) Int. Cl.: C08G 59/50, C08L 63/00

(54) **Use of a polyamine stream as curing agent in epoxy adhesive and flooring applications**

(30) Priority: 13.11.2006 US 598415
(71) Applicant: Air Products and Chemicals, Inc., Allentown, PA 18195-1501 (US)
(72) Inventor: Vedage, Gamini Anada, Bethlehem PA 18017 (US); Shah, Dilipkumar Nandlal, Wescosville PA 18106 (US); Corby, Thomas T., Portland PA 18351 (US)
(74) Representative: Kador & Partner

(57) **Abstract**

An epoxy composition comprising the contact product of a filler, an epoxy resin and an amine component comprising a mixture of mono-, di- , tri- and tetra-substituted amines of structure 1 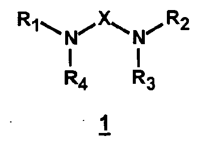 where R₁ is CH2CH2CH2NH2; R₂, R₃ and R₄ independently are H or CH2CH2CH2NH2; and X is CH2CH2 or CH2CH2CH2, in parts by weight (pbw) of 0- 20 pbw monosubstituted amine, 60-95 pbw di-substituted amine, 0-20 pbw tri-substituted amine, and 0-10% tetra-substituted amine. The compositions are useful to produce coatings, adhesives, floorings, composites and other articles.

## Description

### BACKGROUND OF THE INVENTION

Polyethyleneamines curing agents are utilized extensively in many markets for epoxy curing agents including coatings, adhesives, composites, and flooring applications. Polyethyleneamines such as diethylenetriamine (DETA) and triethylenetetramine (TETA) react very rapidly with epoxy resin; however, the cured resin demonstrates poor physical properties such as flexibility and toughness.

There is a need to provide cured epoxy products based on such curing agents that exhibit fast cure speed, especially at ambient temperatures, and improved physical properties.

Polyethylene polyamines are currently manufactured from the reaction of ammonia with either ethylene dichloride or ethanolamine. As new manufacturing assets are built to produce polyethylene polyamines, there is a tendency to favor the ethanolamine process, as it is less corrosive to the manufacturing equipment, and hence more economical. Unfortunately, the ethanolamine process generally produces less TETA than the ethylene dichloride process, and therefore prices for TETA are increasing relative to the prices for other polyethylene polyamines. There is therefore a need for more economical alternatives to TETA in the manufacture of polyamine curing agents. However, it would be advantageous if such an amine would have a molecular weight, amine hydrogen functionality, and chemical structure similar to TETA so as to minimize difficulties in re-formulation of end use products such as coatings, composites, floorings and adhesives.

US 4,178,426 discloses enhancing the adhesive strength of amine-cured epoxy resins by addition of a polyether diureide in combination with bis(3-aminopropyl) ethylenediamine or 3-aminopropyl ethylenediamine.

GB 2,031,431 discloses epoxy resins cured with mixtures of high molecular weight polyoxyalkylene polyamines and N,N'-bis(3-aminopropyl) ethylenediamine.

BASF product literature for N4-AMINE which is identified as N,N'-bis(3-aminopropyl)ethylene-diamine suggests uses for the material including the use of N4-AMINE as a hardener for epoxy resin.

### BRIEF SUMMARY OF THE INVENTION

The present invention provides epoxy compositions that are a contact product comprising (a) an epoxy curing agent composition which comprises a mixture of multifunctional amines of structure **1** 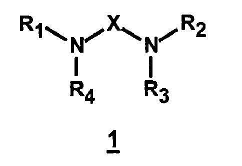 where R₁ is CH2CH2CH2NH2; R₂, R₃ and R₄ independently are H or CH2CH2CH2NH2; and X is CH2CH2 or CH2CH2CH2, (b) an epoxy resin and (c) a filler. The curing agent, or hardener, composition comprises a mixture of mono-, di- ,tri- and tetra-substituted amines of structure **1** in parts by weight (pbw) of 0 to 50 pbw mono-substituted amine, 50 to 95 pbw di-substituted amine and 0 to 50 pbw tri-substituted amine and 0 to 25 pbw tetra-substituted amine. In another aspect the curing agent composition comprises 0 to 20 pbw mono-substituted amine, 60 to 95 pbw di-substituted amine, 0 to 20 pbw tri-substituted amine and 0 to 10 pbw tetra-substituted amine. In a further aspect the curing agent composition comprises 0 to 10 pbw mono-substituted amine, 60 to 90 pbw di-substituted amine, 0 to 20 pbw tri-substituted amine and 0 to 10 pbw tetra-substituted amine.

In one aspect of the invention R₂ and R₃ are not H simultaneously.

In an aspect of the invention, there are provided cured epoxy systems, or compositions, that are the cured contact product comprising the above polyamine curing agent, or curative, composition, an epoxy resin and a filler.

The term "contact product" is used herein to describe compositions wherein the components are contacted together in any order, in any manner, and for any length of time. For example, the components can be contacted by blending or mixing. Further, contacting of any component can occur in the presence or absence of any other component of the compositions or formulations described herein. Moreover, some of the components in the contact product compositions may react to various degrees yielding other materials. Combining additional materials or components can be done by any method known to one of skill in the art.

As an advantage of the current invention, the filled epoxy resin compositions often exhibit faster cure speed than such compositions containing polyamine curing agents of the current art, such as triethylenetetramine (TETA) and the cured epoxy product may manifest improved physical properties.

The curing agent compositions are useful for crosslinking epoxy resins to produce coatings, adhesives, floorings, composites and other articles. Thus, other embodiments of the invention comprise filled coating compositions, adhesive compositions, flooring compositions, composite compositions, their cured products and other cured epoxy articles prepared by curing filler-containing epoxy resin compositions using such curing agent mixture.

### DETAILED DESCRIPTION OF THE INVENTION

The multifunctional amines of structure 1 of the current invention include N-3-aminopropyl ethylenediamine; N,N'-bis(3-aminopropyl) ethylenediamine; N,N-bis(3-aminopropyl) ethylenediamine; N,N,N'-tris(3-aminopropyl) ethylenediamine; N,N,N',N'-tetrakis(3-aminopropyl) ethylenediamine; dipropylene triamine; N-3-aminopropyl-1,3-diaminopropane; N,N'-bis(3-aminopropyl)-1,3-diaminopropane; N,N-bis(3-aminopropyl)-1,3-diaminopropane; and N,N,N'-tris(3-aminopropyl)-1,3-diaminopropane; tetrakis(3-aminopropyl)-1,3-diaminopropane; and mixtures of these amines. These multifunctional amines can be prepared by the Michael reaction of either ethylene diamine or 1,3-diaminopropane with acrylonitrile, followed by hydrogenation over metal catalysts as is well known to those skilled in the art.

A useful amine curative component is a mixture comprising 3-25 pbw of N-3-aminopropyl ethylenediamine, 50 - 94 pbw of N,N'-bis(3-aminopropyl) ethylenediamine, 3 - 25 pbw of N,N,N'-tris(3-aminopropyl) ethylenediamine and 0-10 pbw of N,N,N',N'-tetrakis(3-aminopropyl) ethylenediamine. In another aspect the mixture comprises 1-6 pbw of N-3-aminopropyl ethylenediamine, 80 - 90 pbw of N,N'-bis(3-aminopropyl) ethylenediamine, 2-9 pbw of N,N,N'-tris(3-aminopropyl) ethylenediamine and 1 - 5 pbw of N,N,N',N'-tetrakis(3-aminopropyl) ethylenediamine. Such mixtures can be prepared by the reaction sequence described above for making the multifunctional amine without the need to conduct a distillation or other process of separation, except for the optional removal of low molecular weight side products of the reaction which are more volatile than N-3-aminopropyl ethylenediamine. It will be recognized by those skilled in the art that small quantities of other products of hydrogenation may be present in the mixture.

If desired, the curing agent composition may be modified by incorporation of other multifunctional amines. Examples include ethylenediamine, diethylenetriamine, triethylenetetramine, tetraethylenepentamine, higher polyethyleneamines, aminoethylpiperazine, meta-xylylene diamine, the various isomers of diamine-cyclohexane, isophorone diamine, 3,3'-dimethyl-4,4'-diaminodicyclohexyl methane, 4,4'-diaminodicyclohexyl methane, 2,4'-diaminodicyclohexyl methane, the mixture of methylene bridged poly(cyclohexyl-aromatic)amines (MBPCAA) described in US 5,280,091, 1,2-propylene diamine, 1,3-propylene diamine, 1,4-butanediamine, 1,5-pentanediamine, 1,3-pentanediamine, 1,6-hexanediamine, 3,3,5-trimethyl-1,6-hexanediamine, 3,5,5-trimethyl-1,6-hexanediamine, 2-methyl-1,5-pentanediamine, bis-(3-aminopropyl)amine, N,N'-bis-(3-aminopropyl)-1,2-ethanediamine, N-(3-aminopropyl)-1,2-ethanediamine, 1,2-diaminocyclohexane, 1,3-diaminocyclohexane, 1,4-diaminocyclohexane, the poly(alkylene oxide) diamines and triamines (such as for example Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001 and also aminopropylated ethylene glycols, propanediols, butanediols, hexanediols, polyethylene glycols, polypropylene glycols and polybutanediols.

The polyamine curing agent composition, or hardener, is combined with an epoxy resin which is a polyepoxy compound containing about 2 or more 1,2-epoxy groups per molecule. Such epoxides are described in Y. Tanaka, "Synthesis and Characteristics of Epoxides", in C. A. May, ed., Epoxy Resins Chemistry and Technology (Marcel Dekker, 1988), and are incorporated by reference. Such combination of polyamine curing agent composition and epoxy resin along with filler composes a curable epoxy system according to the invention.

The preferred polyepoxy compounds are the diglycidyl ethers of bisphenol-A, the advanced diglycidyl ethers of bisphenol-A, the diglycidyl ethers of bisphenol-F, and the epoxy novolac resins. The polyamine curing agent composition will be used with conventional liquid and solid epoxy resins which may be supplied in solvents.

To reduce the viscosity of a given formulation of polyamine curing agent compositions of the current invention with a di- or multi-functional epoxy resin, the epoxy resin may be modified with a portion of monofunctional epoxide. In this way viscosity is further reduced, which may be advantageous in certain cases, such as for example to increase the level of filler in a formulation while still allowing easy application, or to allow the use of a higher molecular weight epoxy resin. Examples of useful monoepoxides include styrene oxide, cyclohexene oxide, ethylene oxide, propylene oxide, butylene oxide, and the glycidyl ethers of phenol, the cresols, tert-butylphenol and other alkyl phenols, butanol, 2-ethylhexanol, and C8 to C14 alcohols and the like.

Polyamine compositions of the current invention are normally formulated with epoxy resins at stoichiometric ratios of epoxy groups to amine hydrogens ranging from about 1.5 to 1 to about 1 to 1.5. More preferred are ranges from 1.2 to 1 to 1 to 1.2, especially 1.1 to 1 to 1 to 1.1.

It is also possible to modify the polyamine curing agent compositions of the current invention by reacting a modest portion, e.g., 2 to 30% of the amine hydrogens, preferably 4 to 15%, with difunctional and monofunctional epoxy resins such as those described above. This is a common practice well known to those skilled in the art, and generally referred to as "adduction" with the resulting products being called "adducts". By adducting with difunctional and monofunctional epoxy resins it is possible to improve the compatibility of the polyamine curing agent compositions with epoxy resin and thereby reduce problems such as blush, carbonation and exudation, and to increase pot life. On the other hand, such modification tends to increase viscosity, particularly in the case of difunctional epoxy resins, and may in some cases also decrease the rate of cure. Particularly useful epoxy resins for adduction include the diglycidyl ethers of bisphenol-A, the advanced diglycidyl ethers of bisphenol-A, the diglycidyl ethers of bisphenol-F, styrene oxide, cyclohexene oxide, and the glycidyl ethers of phenol, the cresols, tert-butylphenol and other alkyl phenols, butanol, 2-ethylhexanol, and C8 to C14 alcohols and the like. It is also possible to accomplish a modest level of adduction by mixing the amine and epoxy components and allowing them to stand for some period of time known as an induction period to those skilled in the art, normally 15 to 60 minutes, before application.

In some circumstances it may be advantageous to incorporate so-called accelerators for the epoxy-amine curing reaction in formulations based on polyamine curing agent compositions of the current invention. Such accelerators are described in H. Lee and K. Neville, Handbook of Epoxy Resins, McGraw-Hill, New York, 1967. Suitable accelerators include various organic acids, alcohols, phenols, tertiary amines, hydroxylamines, and the like. Particularly useful accelerators include benzyl alcohol, phenol, alkyl substituted phenols such as nonylphenol, octylphenol, t-butylphenol, cresol and the like, bisphenol-A, salicylic acid, dimethylaminomethylphenol, bis(dimethylaminomethyl)phenol, and tris(dimethylaminomethyl)phenol. Normally, such accelerators are used at levels of 10% or less based on the total weight of binder, and more usually at levels of less than 5%.

In some circumstances it may be advantageous to incorporate plasticizers for the epoxy-amine network in formulations based on polyamine curing agent compositions of the current invention. This is particularly useful in cases where, in the absence of such a plasticizer, the glass transition temperature, Tg, of the composition significantly exceeds the ambient temperature before the degree of reaction necessary to meet certain requirements such as solvent and chemical resistance and tensile strength has been achieved. Such plasticizers are well known to those skilled in the art, and are described more fully in D.F. Cadogan and C.J. Howick, 'Plasticizers', in J.I. Kroschwitz, ed., Kirk-Othmer Encyclopedia of Chemical Technology, 4th Ed., Wiley, New York, 1996, Vol. 19, pp. 258-290. Particularly useful plasticizers include benzyl alcohol, nonylphenol, and various esters of phthalic acid. The ester plasticizers would normally be incorporated in the same package as the epoxy resin to minimize reaction with the amine curing agent. Another particularly useful class of plasticizers are hydrocarbon resins, which include toluene-formaldehyde condensates such as Epodil® L, xylene-formaldehyde condensates such as Nikanol® Y50, coumarone-indene resins, and many other hydrocarbon resin modifiers well know to those skilled in the art.

The third component in the curable epoxy compositions of the present invention comprises filler. Suitable fillers for use in the curable epoxy compositions are inorganic materials such as quartz sand, marble chips, glass fibers, calcium carbonate, mica, talc, aluminum powder, silica, kaolin, glass spheres, glass balloons, barite, hydrous alumina, wood flour, nutshell flour, and carbon black. Fillers most suited for epoxy adhesive compositions are calcium carbonate, mica, talc, aluminum powder and silica. Fillers most suited for epoxy flooring compositions are quartz sand, marble chips and silica.

While both adhesive and flooring epoxy compositions comprise the contact product of a curing agent composition according to the invention, an epoxy resin and filler, the compositions possess different properties suited for their intended use such as load bearing, force imposed on cured compositions, and substrates to which the compositions are applied. These different properties result form the inclusion of other ingredients well known to those skilled in epoxy adhesive and flooring formulations.

Adhesive formulations are designed to bond two similar or dissimilar substrates. Therefore, properties such as shear strength and peel strength are important. Higher performance adhesives (structural adhesives) require higher shear strength and peel strength. Flooring formulations are applied to only one substrate, preferably concrete, and are designed to handle foot traffic and light industrial traffic. Therefore, compressive strength is very important. Higher compressive strength with some ductility is desired.

Filled epoxy compositions for various applications can be formulated with a wide variety of additional ingredients well known to those skilled in the art of epoxy system formulation, including solvents, pigments, pigment dispersing agents, rheology modifiers, thixotropes, flow and leveling aids, defoamers, flexibilizers, and other typical additives.

Adhesive compositions prepared from polyamine curative compositions of the current invention, filler and epoxy resins can be formulated with a wide variety of other ingredients well known to those skilled in the art of adhesive formulation, including polyamides, solvents, pigments, rheology modifiers, thixotropes, defoamers, toughening agents, flexibilizers and other typical additives.

With respect to epoxy adhesive formulations, the curing agent component often includes a typical polyamide at10-70 wt%, preferably 20-40 wt%, to provide higher adhesion. Either the curing agent component or the epoxy resin component may contain a toughening agent such as a liquid rubber modifier at 5 to 50 wt%, preferably 20 to 40 wt%, to provide toughness.

Adhesive epoxy compositions of this invention can be applied by any number of well known techniques including meter-mix dispensing. Numerous substrates are suitable for application of adhesives of this invention with proper surface preparation, as is well understood in the art. Such substrates include but are not limited to many types of metal, particularly steel and aluminum, and wood as well as concrete.

Adhesive epoxy compositions of this invention can be applied and cured at ambient temperatures ranging from about 0°C to about 50°C, with temperatures of 10°C to 40°C preferred. If desired, these coatings can also be force cured at temperatures up to 150°C or more.

Flooring systems prepared from polyamine curative composition of the current invention, filler and epoxy resins can be formulated with a wide variety of ingredients well known to those skilled in the art of flooring formulation, including polyetheramines, solvents, pigments, rheology modifiers, defoamers, and other typical additives.

Often times epoxy flooring formulations containing only polyethyleneamines as curing agent do not provide required ductility (resilience). To improve this particular property, the skilled worker can incorporate low molecular weight (Mw 200-2000, preferably 200-500) polyetheramines such as Jeffamine D-230 or D-400 polyetheramines from Huntsman Chemical. Typical ratio of polyethyleneamine (such as the amine composition of the present invention) to low molecular weight polyetheramine would be 0.06 to 0.8, preferred ratio being 0.3 to 0.8. As the amount of polyethyleneamine increases a formulation becomes more reactive brittle and as the amount of polyetheramine increases a formulation becomes less reactive and more flexible and resilient.

Suitable polyetheramines for use in the present invention also include aminopropylated polyethylene glycol (Mw up to 1000, preferably up to 400), aminopropylated polypropylene glycol Mw up to 1000, preferably up to 400), and aminopropylated polybutanediol (Mw up to 1000, preferably up to 400).

Flooring formulations of this invention can be applied by any number of application techniques including notched squeegee, roller, screed flooring, troweling and terrazzo technique. Primary substrate suitable for application of flooring formulations of this invention with proper surface preparation is concrete although other suitable substrates would include wood.

Flooring formulations of this invention can be applied and cured at ambient temperatures ranging from about 0°C to about 50°C, with temperatures of 10°C to 40°C preferred. If desired, these coatings can also be force cured at temperatures up to 150°C or more.

### EXAMPLE 1

Synthesis of Mixture of N-3-aminopropyl ethylenediamine, N,N'-bis(3-aminopropyl) ethylenediamine, and N,N,N'-tris(3-aminopropyl) ethylenediamine -- To a 1 liter batch reactor was added 236 g of ethylenediamine followed by 5 g of water, and the contents were heated to 60°C. To this mixture 417 g of acrylonitrile was added over 5 hours. Once the acrylonitrile addition was completed the reactor temperature was maintained for an additional 1.5 hours.

A 1 liter batch reactor was charged with 100 g of isopropanol, 6.6 g of water and 7.5 g of Raney Co catalyst. The reactor was pressure cycled first with nitrogen and then with hydrogen to remove any traces of entrained air. After pressure cycling, the reactor was filled with 5.5 MPa hydrogen and then heated to 120°C. The 500 g of product from the previous step was the added to the reactor over 4 hours. During this time reactor pressure was maintained at 5.5 MPa by supplying hydrogen to it from a one liter ballast tank. Once the addition was over the temperature was maintained at 120°C for an additional hour to make sure the hydrogenation was complete.

The reactor was cooled down to room temperature, and the product was filtered. The product was analyzed by area percent GC and it contained 6% N-3-aminopropyl ethylenediamine, 80% N,N'-bis(3-aminopropyl) ethylenediamine, and 11% N,N,N'-tris(3-aminopropyl) ethylenediamine, 2% N,N,N',N'-tetrakis(3-aminopropyl) ethylenediamine, and 1% other components. This area percent translates to wt% or pbw. This amine composition was used in both Examples 2 and 3.

### EXAMPLE 2

### Adhesive Formulations and Properties

A formulated epoxy adhesive composition was prepared by combining in a high speed mixer equipped with a Cowles blade, 180 g of DER® 331 epoxy resin (Dow Chemical Co., epoxy equivalent weight = 190), 70.0 g Microtuff AG 445 filler (Mineral Technologies), 5 g Cab-O-Sil® M-5 fumed silica (Cabot, Inc). The resin base was combined with the curing agents indicated in the following table. Ancamine® TETA (triethylenetetramine) which is a polyamine curing agent available from Air Products and Chemicals, Inc., with an amine value of 1435 mg KOH/g and an AHEW of 27 was used in Run A. After mixing for 2 minutes, the adhesive was applied to cold rolled steel substrate (2.54cm X 10.2cm coupon) at a 5 mil film thickness to prepare standard lap shear samples and T-peel samples. The samples were cured for seven days at 25°C.

Run B comprised the same formulation as Run A except that the curing agent comprised the amine composition of Example 1. The evaluation of Runs A and B are shown in the following table

| RUN | A | B |
|---|---|---|
| TETA, g | 25.58 | |
| Polyamine of Ex 1, g | | 27.77 |
| | | |
| Shear Strength, psi | 1850 | 2180 |
| Peel Strength, pli | 9.0 | 11.5 |

Curing agents of the current invention (Run B) yielded an adhesive system which provided about 20% higher shear strength and about 30% higher peel strength than comparative Run A. The higher shear strength along with higher peel strength obtained from the formulation based on curing agent of the current invention suggests that the formulation is more ductile than the TETA curing agent.

### EXAMPLE 3

### Flooring Formulations and Properties

A formulated epoxy flooring system was prepared by combining in a medium speed mixer 1005g of DER® 331 epoxy resin, 14.5g Surfynol® DF 695 defoamer, 3668g of a blend of quartz sand with particle sizes ranging from 30 to 100 US standard sieve size. The resin base was combined with the curing agents indicated in the following table. Run C used 142.5 g of TETA and Run D used 154.7 g of the amine mixture of Example 1. After mixing 5 minutes, the formulations were poured in molds to prepare samples for tensile, compressive and flexural properties as per ASTM C-307, C-109, C-580 test procedures, respectively. Curing agent of the current invention yielded system that demonstrated 50% increase in tensile strength, about 20% increase in tensile elongation and 35% increase in flexural strength. The increase in tensile elongation and flexural strength without any adverse impact on tensile strength and compressive strength was unexpected.

| RUN | C | D |
|---|---|---|
| TETA, g | 142.5 | - |
| Polyamine of Ex 1, g | - | 154.7 |
| | | |
| Tensile Strength, psi | 1786 | 2701 |
| Tensile Elongation, % | 11.4 | 13.4 |
| Flexural Strength, psi | 4518 | 6100 |
| Compressive Strength, psi | 16,370 | 16,380 |

## Claims

1. An epoxy composition comprising the contact product of a filler, an epoxy resin and an amine component comprising a mixture of mono-, di- , tri- and tetra-substituted amines of structure 1 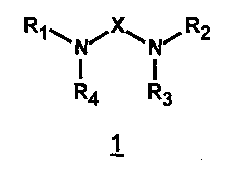 where R₁ is CH2CH2CH2NH2; R₂, R₃ and R₄ independently are H or CH2CH2CH2NH2; and X is CH2CH2 or CH2CH2CH2, in parts by weight (pbw) of 0-50 pbw mono-substituted amine, 50-95 pbw di-substituted amine, 0-50 pbw tri-substituted amine, and 0-25 pbw tetra-substituted amine.

2. The composition of Claim 2 in which the amine mixture comprises N-3-aminopropyl ethylenediamine, N,N'-bis(3-aminopropyl) ethylenediamine, N,N,N'-tris(3-aminopropyl) ethylenediamine and N,N,N'N'-tetrakis(3-aminopropyl) ethylenediamine in the stated pbw.

3. The composition of Claim 1 in which X is CH2CH2.

4. The composition of Claim 1 in which X is CH2CH2CH2.

5. The composition of Claim 1 in which the amine mixture comprises 0 to 20 pbw mono-substituted amine, 60 to 95 pbw di-substituted amine, 0 to 20 pbw tri-substituted amine and 0 to 10 pbw tetra-substituted amine.

6. The composition of Claim 3 in which the amine mixture comprises 0 to 20 pbw mono-substituted amine, 60 to 95 pbw di-substituted amine, 0 to 20 pbw tri-substituted amine and 0 to 10 pbw tetra-substituted amine.

7. The composition of Claim 1 in which the amine mixture comprises 3 - 25 pbw of N-(3-aminopropyl) ethylenediamine, 50 - 94 pbw of N,N'-bis(3-aminopropyl) ethylenediamine, 3 - 25 pbw of N,N,N'-tris(3-aminopropyl) ethylenediamine and 0-10 pbw of N,N,N',N'-tetrakis(3-aminopropyl) ethylenediamine.

8. The composition of Claim 1 in which the amine mixture comprises 1-6 pbw of N-(3-aminopropyl) ethylenediamine, 80 - 90 pbw of N,N'-bis(3-aminopropyl) ethylenediamine, 2-9 pbw of N,N,N'-tris(3-aminopropyl) ethylenediamine and 1-5 pbw of N,N,N',N'-tetrakis(3-aminopropyl) ethylenediamine.

9. The composition of Claim 1 comprising the amine curative component and the epoxy resin in a stoichiometric ratio of epoxy groups to amine hydrogens ranging from about 1.5:1 to about 1:1.5.

10. The composition of Claim 1 in which the epoxy resin is a diglycidyl ether of bisphenol-A, an advanced diglycidyl ether of bisphenol-A, a diglycidyl ether of bisphenol-F, an epoxy novolac resin, or a mixture thereof.

11. The composition of Claim 1 in which 2 to 30% of the amine hydrogens of the amine component is adducted with a difunctional or monofunctional epoxy resin.

12. The composition of Claim 11 in which the amine mixture is adducted with a diglycidyl ether of bisphenol-A, an advanced diglycidyl ether of bisphenol-A, a diglycidyl ether of bisphenol-F, styrene oxide, cyclohexene oxide, and a glycidyl ether of phenol, a cresol, tert-butylphenol and an alkyl phenol, butanol, 2-ethylhexanol, or a C8 to C14 alcohol.

13. The composition of Claim 1 in which the filler is one or more of quartz sand, marble chips, glass fibers, calcium carbonate, mica, talc, aluminum powder, silica, kaolin, glass spheres, glass balloons, barite, hydrous alumina, wood flour, nutshell flour, and carbon black.

14. In an epoxy adhesive composition comprising an amine curing agent composition, an epoxy resin and a filler, the improvement which the amine curing agent comprises a mixture of mono-, di- , tri- and tetra-substituted amines of structure 1 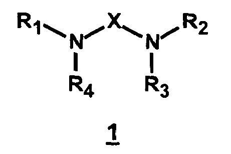 where R₁ is CH2CH2CH2NH2; R₂, R₃ and R₄ independently are H or CH2CH2CH2NH2; and X is CH2CH2 or CH2CH2CH2, in parts by weight (pbw) of 0-50 pbw mono-substituted amine, 50-95 pbw di-substituted amine, 0-50 pbw tri-substituted amine, and 0-25 pbw tetra-substituted amine.

15. The epoxy adhesive composition of Claim 14 in which the amine mixture comprises 3-25 pbw of N-(3-aminopropyl) ethylenediamine, 50 - 94 pbw of N,N'-bis(3-aminopropyl) ethylenediamine, 3-25 pbw of N,N,N'-tris(3-aminopropyl) ethylenediamine and 0-10 pbw of N,N,N',N'-tetrakis(3-aminopropyl) ethylenediamine.

16. The epoxy adhesive composition of Claim 15 comprising one or more of polyamides, solvents, pigments, rheology modifiers, thixotropes, defoamers, toughening agents and flexibilizers.

17. In an epoxy flooring composition comprising an amine curing agent composition, an epoxy resin and a filler, the improvement which the amine curing agent comprises a mixture of mono-, di- , tri- and tetra-substituted amines of structure 1 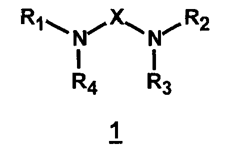 where R₁ is CH2CH2CH2NH2; R₂, R₃ and R₄ independently are H or CH2CH2CH2NH2; and X is CH2CH2 or CH2CH2CH2, in parts by weight (pbw) of 0-50 pbw mono-substituted amine, 50-95 pbw di-substituted amine, 0-50 pbw tri-substituted amine, and 0-25 pbw tetra-substituted amine.

18. The epoxy flooring composition of Claim 17 in which the amine mixture comprises 3-25 pbw of N-(3-aminopropyl) ethylenediamine, 50 - 94 pbw of N,N'-bis(3-aminopropyl) ethylenediamine, 3-25 pbw of N,N,N'-tris(3-aminopropyl) ethylenediamine and 0-10 pbw of N,N,N',N'-tetrakis(3-aminopropyl) ethylenediamine.

19. The epoxy flooring composition of Claim 18 comprising one or more of polyetheramines, solvents, pigments, rheology modifiers and defoamers.

20. The epoxy flooring composition of Claim 18 comprising a polyetheramine of MW 200-2000.
